(19) Europäisches Patentamt
European Patent Office
Office européen des brevets

(11) **EP 4 378 679 A1**

(12) **EUROPEAN PATENT APPLICATION**
published in accordance with Art. 153(4) EPC

(43) Date of publication:
**05.06.2024 Bulletin 2024/23**

(21) Application number: **22848874.8**

(22) Date of filing: **25.02.2022**

(51) International Patent Classification (IPC):
**B32B 7/027** (2019.01)      **F16L 59/02** (2006.01)
**H01M 10/625** (2014.01)      **H01M 10/658** (2014.01)
**H01M 50/204** (2021.01)

(52) Cooperative Patent Classification (CPC):
**B32B 7/027; F16L 59/02; H01M 10/625;**
**H01M 10/658; H01M 50/204;** Y02E 60/10

(86) International application number:
**PCT/JP2022/007902**

(87) International publication number:
**WO 2023/007790 (02.02.2023 Gazette 2023/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.07.2021   JP 2021126038**
**23.12.2021   JP 2021209895**

(71) Applicant: **IBIDEN Co., Ltd.**
**Gifu 503-8604 (JP)**

(72) Inventors:
• **SHIMADA Shohei**
**Ibi-gun, Gifu 501-0695 (JP)**
• **YAMAGUCHI Masataka**
**Ibi-gun, Gifu 501-0695 (JP)**
• **JIMBO Naoyuki**
**Ibi-gun, Gifu 501-0695 (JP)**

(74) Representative: **Hoffmann Eitle**
**Patent- und Rechtsanwälte PartmbB**
**Arabellastraße 30**
**81925 München (DE)**

(54) **THERMAL INSULATION SHEET, METHOD FOR PRODUCING THERMAL INSULATION SHEET, AND BATTERY PACK**

(57)    To provide a thermal insulation sheet that prevents peeling off of a resin layer, prevents falling off of a thermal insulation material component, has a low thermal conductivity, and has flame retardancy, a method for producing a thermal insulation sheet, and a battery pack using the above thermal insulation sheet. A thermal insulation sheet (10) contains: a thermal insulation material (2) containing inorganic particles (41); and a resin film (1) covering at least a part of a surface of the thermal insulation material (2).

FIG.2

EP 4 378 679 A1

**Description**

TECHNICAL FIELD

The present invention relates to a thermal insulation sheet, a method for producing the same, and a battery pack using the thermal insulation sheet.

BACKGROUND ART

In the related art, in order to prevent heat transfer from a heating element to other objects, a thermal insulation sheet that is placed close to the heating element or at least partially in contact with the heating element has been used.

In recent years, from the viewpoint of environmental protection, an electric vehicle or a hybrid vehicle driven by an electric motor have been actively developed. The electric vehicle or the hybrid vehicle is equipped with a battery pack in which battery cells are connected in series or in parallel to serve as a power source for an electric drive motor.

For the battery cells, a lithium-ion secondary battery having high capacity and capable of high output is mainly used as compared with a lead-acid battery, a nickel-metal hydride battery, or the like. However, when one battery cell experiences thermal runaway due to an internal short circuit, an overcharge, or the like in the battery (that is, in the case of "abnormality"), propagation of heat to other adjacent battery cells may cause thermal runaway in other adjacent battery cells.

Therefore, in a power storage device such as a lithium-ion secondary battery, various kinds of thermal insulation materials disposed between battery cells have been studied.

For example, Patent Literature 1 discloses an insulator having an inorganic thermal insulation material and a polymer coating layer disposed on a surface of the inorganic thermal insulation material as a thermal insulation material that can be disposed between battery cells, and discloses that by including the polymer coating layer, it is possible to prevent components in inorganic particle material contained in the inorganic thermal insulation material from falling off.

In addition, Patent Literature 2 discloses a thermal insulation material including a layer, on a surface, containing a resin and expandable graphite and having a thickness of 10 $\mu$m to 3 mm.

CITATION LIST

PATENT LITERATURE

Patent Literature 1: JP2019-508632A
Patent Literature 2: JP2020-2979A

SUMMARY OF INVENTION

TECHNICAL PROBLEM

However, in the insulator disclosed in Patent Literature 1, there is a concern that the polymer coating layer may peel off from the inorganic thermal insulation material due to warpage due to a difference in shrinkage during processing or due to a difference in shrinkage and expansion in a normal-use temperature range.

In addition, in the thermal insulation material disclosed in Patent Literature 2, since graphite having a high expansion coefficient is blended in the surface layer, there is a concern that fire resistance may be insufficient in the event of thermal runaway of the battery.

The present invention has been made in view of the above problems, and an object of the present invention is to provide a thermal insulation sheet that prevents peeling off of a resin layer, prevents falling off of a thermal insulation material component, has a low thermal conductivity, and has flame retardancy, and a method for producing the same. Another object of the present invention is to provide a battery pack including the above thermal insulation sheet.

SOLUTION TO PROBLEM

The above object of the present invention is achieved by the following configuration [1] related to a thermal insulation sheet.

[1] A thermal insulation sheet containing:

a thermal insulation material containing inorganic particles; and
a resin film covering at least a part of a surface of the thermal insulation material.

In addition, preferred embodiments of the present invention relating to the thermal insulation sheet relate to the following [2] to [13].

[2] The thermal insulation sheet according to [1], in which the resin film has an average thickness of 1 μm to 95 μm.

[3] The thermal insulation sheet according to [1] or [2], in which the resin film has a thickness of more than 0 μm and less than 100 μm.

[4] The thermal insulation sheet according to any one of [1] to [3], in which the resin film is irregularly curved along a surface shape of the thermal insulation material.

[5] The thermal insulation sheet according to any one of [1] to [4], in which the resin film has pores.

[6] The thermal insulation sheet according to [5], in which the pores are distributed in a dispersed manner over an entire surface of the resin film.

[7] The thermal insulation sheet according to [5] or [6], in which a ratio (A/B) of a total area A of a resin film portion to a total area B of a pore portion, calculated by observing a digital microscope image of a surface on a resin film side, is 7/3 to 99/1.

[8] The thermal insulation sheet according to any one of [1] to [7], in which the inorganic particles are particles made of at least one kind of inorganic material selected from oxide particles, carbide particles, nitride particles, and inorganic hydrate particles.

[9] The thermal insulation sheet according to any one of [1] to [8], in which the thermal insulation material further contains first inorganic fibers and second inorganic fibers, the first inorganic fibers being different from the second inorganic fibers in at least one property selected from an average fiber diameter, a shape, and a glass transition point.

[10] The thermal insulation sheet according to [9], in which

the average fiber diameter of the first inorganic fibers is larger than the average fiber diameter of the second inorganic fibers, and
the first inorganic fibers are linear or acicular, and the second inorganic fibers are dendritic or curly.

[11] The thermal insulation sheet according to [9], in which

the first inorganic fibers are amorphous fibers,
the second inorganic fibers are at least one kind of fibers selected from amorphous fibers and crystalline fibers, the amorphous fibers having a glass transition point higher than the glass transition point of the first inorganic fibers, and
the average fiber diameter of the first inorganic fibers is larger than the average fiber diameter of the second inorganic fibers.

[12] The thermal insulation sheet according to [9], in which

the inorganic particles include at least one kind selected from nanoparticles, hollow particles, and porous particles,
the first inorganic fibers are amorphous fibers, and
the second inorganic fibers are at least one kind of inorganic fibers selected from amorphous fibers and crystalline fibers, the amorphous fibers having a glass transition point higher than the glass transition point of the first inorganic fibers.

[13] The thermal insulation sheet according to any one of [1] to [12], which is used in a battery pack in which battery cells are connected in series or in parallel.

In addition, the above object of the present invention is achieved by the following configuration [14] related to a method for producing a thermal insulation sheet.

[14] A method for producing a thermal insulation sheet which is a method for producing the thermal insulation sheet according to any one of [1] to [13], including:

a step of molding a material for the thermal insulation material containing the inorganic particles into a sheet shape; and
a step of coating a surface of the thermal insulation material molded into the sheep shape with a resin film forming composition by a screen printing method or a spray coat printing method to form the resin film.

Further, the above object of the present invention is achieved by the following configuration [15] relating to a battery pack.

[15] A battery pack including:

battery cells; and
the thermal insulation sheet according to [13], in which
the battery cells are connected in series or in parallel.

ADVANTAGEOUS EFFECTS OF INVENTION

According to the present invention, it is possible to provide a thermal insulation sheet that prevents peeling off of a resin layer, prevents falling off of a thermal insulation material component, has a low thermal conductivity, and has flame retardancy, and a method for producing the same. In addition, according to the present invention, it is possible to provide a battery pack including a thermal insulation sheet that prevents peeling off of a resin layer, prevents falling off of a thermal insulation material component, has a low thermal conductivity, and has flame retardancy.

BRIEF DESCRIPTION OF DRAWINGS

[Fig. 1] Fig. 1 is a plan view schematically showing a thermal insulation sheet according to an embodiment of the present invention.
[Fig. 2] Fig. 2 is a cross-sectional view schematically showing the thermal insulation sheet according to the embodiment of the present invention.
[Fig. 3] Fig. 3 is a SEM (scanning electron microscope) image of a cross section of the thermal insulation sheet according to the embodiment of the present invention.
[Fig. 4] Fig. 4 is a schematic diagram illustrating a method for measuring an average thickness of a resin film in the thermal insulation sheet according to the embodiment of the present invention.
[Fig. 5] Fig. 5 is a cross-sectional view schematically showing a thermal insulation sheet using a thermal insulation material containing two kinds of inorganic particles.
[Fig. 6] Fig. 6 is a cross-sectional view schematically showing an example of a battery pack to which the thermal insulation sheet according to the embodiment of the present invention is applied.
[Fig. 7] Fig. 7 is a photograph substituted for a drawing of a surface of a thermal insulation sheet in Example 1, which is taken using a digital microscope.
[Fig. 8] Fig. 8 is a schematic diagram illustrating a measurement method in Examples of the present invention.
[Fig. 9] Fig. 9 is a schematic diagram illustrating a measurement method in Examples of the present invention.

DESCRIPTION OF EMBODIMENTS

In order to provide a thermal insulation sheet that prevents peeling off of a resin layer, prevents falling off of a thermal insulation material component, has a low thermal conductivity, and has flame retardancy, the present inventors have made intensive studies.

As a result, the present inventors have found that the above problem can be solved by providing a film-like resin film containing a resin on at least a part of a surface of a thermal insulation material containing inorganic particles.

When a thermal insulation sheet according to an embodiment of the present invention includes a resin film on a surface of a thermal insulation material, inorganic particles contained in the thermal insulation material can be prevented from falling off. In addition, when the resin film is thin and has excellent flexibility, peeling off from the thermal insulation material due to a difference in shrinkage during heating can be prevented.

Further, when the resin film is thin, a change in content of the resin in the entire thermal insulation sheet due to the provision of the resin film is small, and a decrease in flame retardancy and an increase in thermal conductivity of the thermal insulation sheet can also be prevented.

Hereinafter, embodiments of the present invention will be described in detail with reference to the drawings. Note that the present invention is not limited to the embodiments described below, and can be freely changed and implemented without departing from the gist of the present invention.

[1. Thermal Insulation Sheet]

The thermal insulation sheet according to the embodiment of the present invention contains: a thermal insulation material containing inorganic particles; and a resin film covering at least a part of a surface of the thermal insulation material.

[1-1. Resin Film]

The thermal insulation sheet according to the present embodiment has at least a part of the surface of the thermal insulation material covered with a resin film.

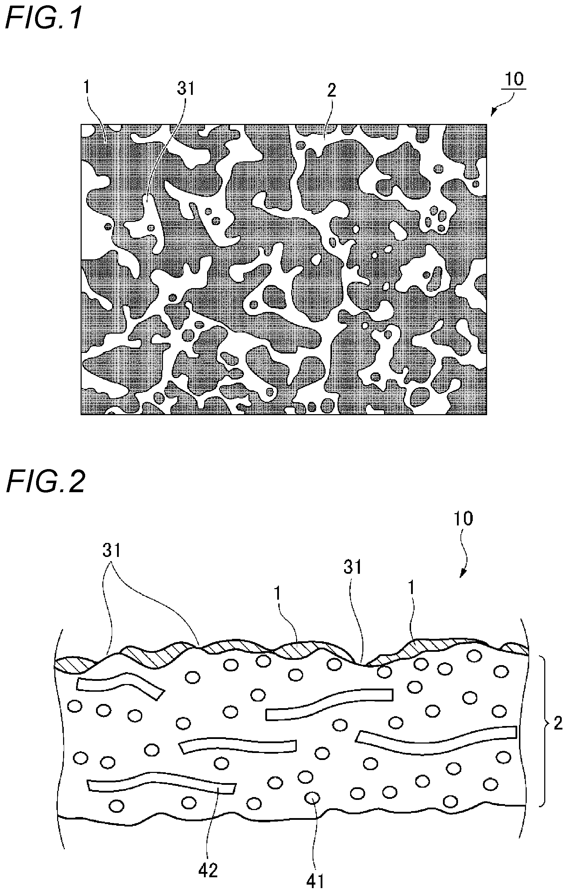

Fig. 1 is a plan view schematically showing the thermal insulation sheet according to the embodiment of the present invention. In addition, Fig. 2 is a cross-sectional view schematically showing the thermal insulation sheet according to the embodiment of the present invention.

In the thermal insulation sheet shown in Fig. 1 and Fig. 2, a thermal insulation sheet 10 according to the present embodiment has at least a part of a surface of a thermal insulation material 2 containing inorganic particles 41 covered with a resin film 1. The thermal insulation material 2 may contain inorganic fibers 42.

It is preferable that the surface of the thermal insulation material 2 has an uncovered portion that is not covered with the resin film 1, and the resin film 1 may have pores 31. A portion having the pores 31 can be an uncovered portion. When the resin film 1 has the pores 31, the flexibility of the resin film is further improved, and peeling off from the surface of the thermal insulation material can be further prevented. In addition, the increase in thermal conductivity and the decrease in flame retardancy of the thermal insulation sheet can be further prevented.

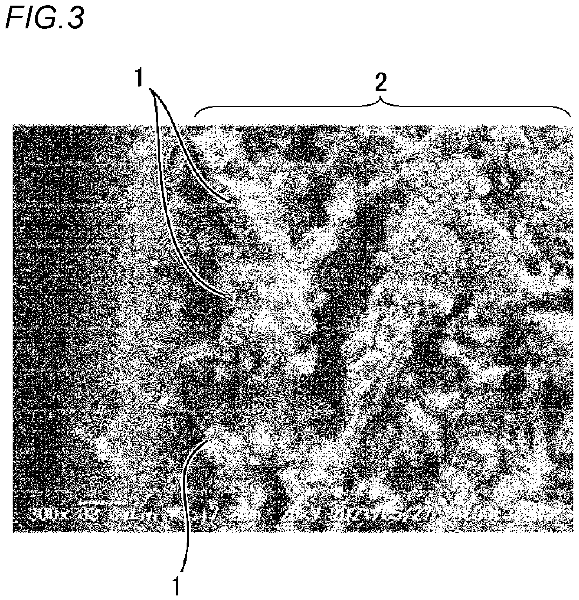

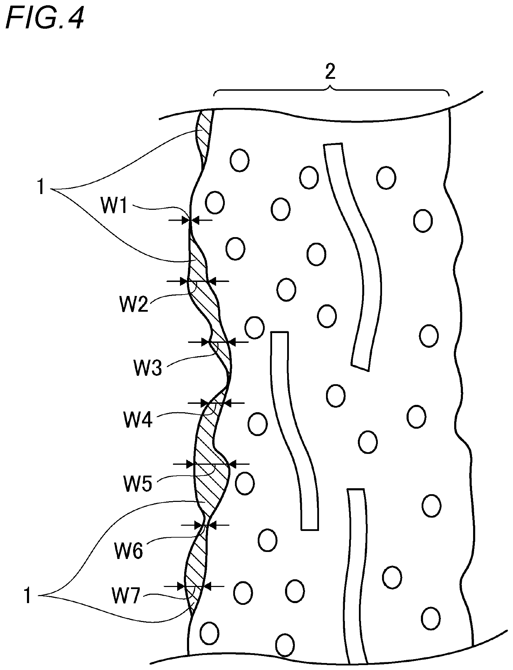

Fig. 3 is a SEM (scanning electron microscope) image of a cross section of the thermal insulation sheet according to the embodiment of the present invention. In addition, Fig. 4 is a schematic diagram illustrating a method for measuring an average thickness of the resin film in the thermal insulation sheet according to the embodiment of the present invention.

As shown in Fig. 2 to Fig. 4, the resin film 1 preferably has a non-uniform thickness. When the thickness of the resin film 1 is made non-uniform, both film strength provided by a thick (large film thickness) portion and film flexibility provided by a thin (small film thickness) portion can be achieved.

In addition, as shown in Fig. 2 to Fig. 4, the resin film 1 is preferably irregularly curved along a surface shape of the thermal insulation material 2. When the resin film is irregularly curved, a heat transfer area with a heating element can be reduced, and the increase in thermal conductivity of the thermal insulation sheet can be prevented.

The thickness of the resin film is preferably more than 0 $\mu$m and less than 100 $\mu$m.

The thickness of the resin film is more preferably 1 $\mu$m or more, still more preferably 4 $\mu$m or more, and even more preferably 8 $\mu$m or more. In addition, the thickness of the resin film is more preferably 50 $\mu$m or less, still more preferably 25 $\mu$m or less, and even more preferably 15 $\mu$m or less.

When the thickness of the resin film is more than 0 $\mu$m, good film strength is obtained. In addition, when the thickness of the resin film is less than 100 $\mu$m, an effect of preventing the peeling off of the resin film from the thermal insulation material, an effect of preventing the increase in thermal conductivity, and an effect of preventing the decrease in flame retardancy are easily obtained.

The average thickness of the resin film is preferably 1 $\mu$m to 95 $\mu$m.

The average thickness of the resin film is preferably 1 $\mu$m or more, more preferably 4 $\mu$m or more, and still more preferably 8 $\mu$m or more. In addition, the average thickness of the resin film is more preferably 50 $\mu$m or less, still more preferably 25 $\mu$m or less, and even more preferably 15 $\mu$m or less.

When the average thickness of the resin film is 1 $\mu$m or more, good film strength is obtained. In addition, when the average thickness of the resin film is 95 $\mu$m or less, the effect of preventing the peeling off of the resin film from the thermal insulation material, the effect of preventing the increase in thermal conductivity, and the effect of preventing the decrease in flame retardancy are easily obtained.

Note that the thickness of the resin film can be determined by analyzing a SEM image of the cross section of the thermal insulation sheet.

The average thickness of the resin film is the average value obtained by measuring the thickness of the resin film at multiple positions at regular intervals. For example, as shown in Fig. 3 and Fig. 4, the SEM image of the cross section of the thermal insulation sheet can be analyzed to measure the thickness of the resin film at 7 measurement positions W1 to W7 (arrows in the figure) and calculate the average thickness. Although there are 7 measurement positions in Fig. 4, the number is not particularly limited, and may be 7 or more, and preferably 7 to 10.

The thickness and the average thickness of the resin film can be specifically measured by the method described in Examples.

As described above, the resin film may cover at least a part of the surface of the thermal insulation material. It is preferable that the surface of the thermal insulation material has a partially uncovered portion, and it is more preferable that the resin film has pores. When the resin film has the pores, the flexibility of the resin film is further improved, and peeling off of the resin film from the surface of the thermal insulation material can be further prevented. In addition, the increase in thermal conductivity and the decrease in flame retardancy can be further prevented.

From the viewpoint of improving the above effects, it is preferable that the pores are distributed in a dispersed manner over the entire surface of the resin film.

A ratio (A/B) of a total area A of a resin film portion to a total area B of a pore portion, calculated by observing a digital microscope image of the surface on the resin film side, is preferably 7/3 to 99/1.

The A/B is more preferably 8/2 or more, still more preferably 85/15 or more, and even more preferably 9/1 or more. In addition, the A/B is preferably 99/1 or less, and more preferably 97/3 or less.

When the A/B is 7/3 or more, an effect of preventing the falling off of the inorganic particles contained in the thermal insulation material, the effect of preventing the increase in thermal conductivity, and the effect of preventing the decrease in flame retardancy are easily obtained.

In addition, when the A/B is 99/1 or less, the effect of preventing the peeling off of the resin film is easily obtained.

The A/B is calculated by using a digital microscope (KEYENCE VHX-5000) to observe the surface of the thermal insulation sheet provided with the resin film at a magnification of 20 and calculating a range of brightness settings 96 to 255 as the total area B of the pore portion and a range of brightness settings of 0 to 96 as the total area A of the resin film portion.

The kind of the resin that forms the resin film is not limited as long as the effects of the present invention can be obtained. A flame-retardant resin is preferred, and examples thereof include an epoxy resin, a melamine resin, a silicone resin, a urethane resin, a polyvinyl alcohol (PVA), an acrylic resin, and a polyester resin. A resin having natural fire extinguishing properties or a resin having a high oxygen index is more preferred.

The resin film may contain components other than the resin, for example, organic fibers, inorganic fibers, organic fillers, inorganic fillers, organic pigments, and inorganic pigments.

[1-2. Thermal Insulation Material]

The thermal insulation material used in the thermal insulation sheet according to the present embodiment is not particularly limited as long as it contains inorganic particles and has a thermal insulation effect. The thermal conductivity can be mentioned as an indicator indicating the thermal insulation effect. In the present embodiment, the thermal conductivity of the thermal insulation material is preferably less than 1 (W/m·K), more preferably less than 0.5 (W/m·K), and still more preferably less than 0.2 (W/m·K). Further, the thermal conductivity of the thermal insulation material is even more preferably less than 0.1 (W/m·K), even still more preferably less than 0.05 (W/m·K), and particularly preferably less than 0.02 (W/m·K).

Note that the thermal conductivity of the thermal insulation material can be measured in accordance with "Testing method for thermal conductivity of refractories" described in JIS R 2251.

As the inorganic particles, a single kind of inorganic particles may be used, or two or more kinds of inorganic particles may be used in combination. When two or more kinds of inorganic particles having different effects of preventing heat transfer are combined, the heating element can be cooled in multiple stages and a heat absorption effect can be exhibited over a wider temperature range, so that thermal insulation performance can be improved. When two or more kinds of inorganic particles are contained, preferred kinds, shapes, and particle diameters of the inorganic particles will be described below.

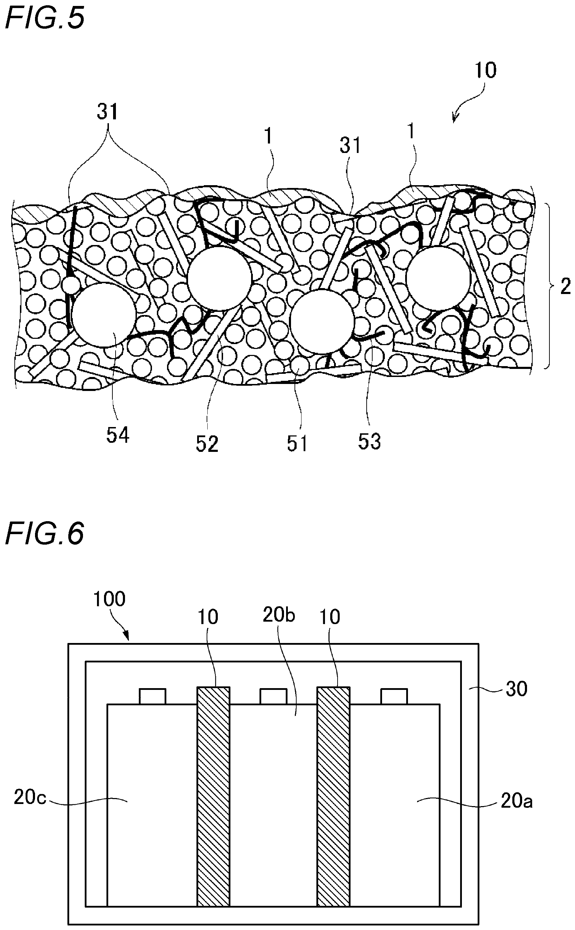

Fig. 5 is a cross-sectional view schematically showing a thermal insulation sheet using a thermal insulation material containing two kinds of inorganic particles. However, the thermal insulation material shown in Fig. 5 also contains two kinds of inorganic fibers, which will be described later.

From the viewpoint of the effect of preventing heat transfer, first inorganic particles 51 and second inorganic particles 54 are preferably particles made of at least one kind of inorganic material selected from oxide particles, carbide particles, nitride particles, and inorganic hydrate particles, and more preferably oxide particles. In addition, silica nanoparticles, metal oxide particles, inorganic balloons such as microporous particles or hollow silica particles, particles made of a thermally expandable inorganic material, particles made of a hydrous porous material, or the like can also be used. Hereinafter, the inorganic particles will be described in more detail, with small-diameter inorganic particles as the first inorganic particles 51 and large-diameter inorganic particles as the second inorganic particles 54.

<1-2-1. First Inorganic Particles>

(Oxide particles)

Oxide particles have a high refractive index and have a strong effect of diffusely reflecting light, so that when oxide particles are used as the inorganic particles, radiant heat transfer can be prevented, particularly in a high temperature range with abnormal heat generation or the like. As the oxide particles, at least one kind of particles selected from silica, titania, zirconia, zircon, barium titanate, zinc oxide, and alumina can be used. That is, among the above oxide particles that can be used as the inorganic particles, only one kind or two or more kinds of oxide particles may be used. Particularly, silica is a component having a thermal insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particles.

(Average primary particle diameter of oxide particles: 0.001 μm or more and 50 μm or less)

Since the particle diameter of the oxide particles may influence an effect of reflecting radiant heat, when the average primary particle diameter thereof is limited to a predetermined range, an even higher thermal insulation property can be obtained.

That is, when the average primary particle diameter of the oxide particles is 0.001 μm or more, a wavelength thereof is sufficiently larger than a wavelength of light that contributes to heating, and it diffusely reflects the light efficiently. Therefore, in a high temperature range of 500°C or higher, the radiant heat transfer of heat within the thermal insulation material can be prevented, and the thermal insulation property can be further improved.

On the other hand, when the average primary particle diameter of the oxide particles is 50 μm or less, even with compression, the number of contact points between the particles does not increase, and it is difficult to form a conductive heat transfer path. Therefore, the influence on the thermal insulation property particularly in a normal temperature range where the conductive heat transfer is dominant can be reduced.

Note that in the present invention, the average primary particle diameter can be determined by observing particles with a microscope, comparing the particles with a standard scale, and taking an average of any 10 particles.

(Nanoparticles)

In the present invention, the nanoparticles refer to nanometer-order particles having a spherical or nearly spherical shape and having an average primary particle diameter of less than 1 μm. The nanoparticles have a low density and thus prevent the conductive heat transfer, and when nanoparticles are used as the inorganic particles, voids are further finely dispersed, so that an excellent thermal insulation property of preventing convective heat transfer can be obtained. Therefore, it is preferable to use nanoparticles since they can prevent the conduction of heat between adjacent nanoparticles during normal use of a battery in a normal temperature range.

In addition, when fine particles such as silica nanoparticles are used in the thermal insulation material, the effect of preventing the falling off of the thermal insulation material component by the thermal insulation sheet according to the present invention is easily obtained.

Further, when nanoparticles having a small average primary particle diameter are used as the oxide particles, even when the thermal insulation sheet is compressed by expansion due to thermal runaway of the battery cell and the internal density increases, an increase in conductive heat transfer of the thermal insulation sheet can be prevented. This is thought to be because the nanoparticles tend to form fine voids between particles due to a repulsive force caused by static electricity, and the bulk density thereof is low, so that the particles are used for filling so as to provide a cushioning property.

Note that in the present invention, when the nanoparticles are used as the inorganic particles, the kind thereof is not particularly limited as long as the above definition of nanoparticles is met. For example, since silica nanoparticles are a material having a high thermal insulation property and have a few contact points between particles, the amount of heat conducted by the silica nanoparticles is smaller than that in a case of using silica particles having a large particle diameter. In addition, since generally available silica nanoparticles have a bulk density of about 0.1 (g/cm$^3$), for example, even when battery cells disposed on both sides of the thermal insulation sheet thermally expand and a large compressive stress is applied to the thermal insulation sheet, the size (area) or the number of contact points between silica nanoparticles does not increase remarkably, and the thermal insulation property can be maintained. Therefore, it is preferable to use silica nanoparticles as the nanoparticles. As the silica nanoparticles, wet silica, dry silica, aerogel, or the like can be used.

(Average primary particle diameter of nanoparticles: 1 nm or more and 100 nm or less)

When the average primary particle diameter of the nanoparticles is limited to a predetermined range, an even higher thermal insulation property can be obtained.

That is, when the average primary particle diameter of the nanoparticles is 1 nm or more and 100 nm or less, the convective heat transfer and the conductive heat transfer of the heat within the thermal insulation material can be prevented particularly in a temperature range of lower than 500°C, and the thermal insulation property can be further improved. In addition, even when a compressive stress is applied, voids remaining between the nanoparticles and contact points between many particles can prevent the conductive heat transfer, and the thermal insulation property of the thermal insulation sheet can be maintained.

Note that the average primary particle diameter of the nanoparticles is more preferably 2 nm or more, and still more preferably 3 nm or more. On the other hand, the average primary particle diameter of the nanoparticles is more preferably 50 nm or less, and still more preferably 10 nm or less.

(Inorganic hydrate particles)

The inorganic hydrate particles exhibit a so-called "heat absorption effect" that the inorganic hydrate particles receive heat from the heating element, thermally decompose when reaching a thermal decomposition start temperature or higher, release crystal water thereof, and lower the temperature of the heating element and surroundings. The inorganic hydrate particles form porous material after releasing the crystal water, and exhibit a thermal insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits an heat absorption effect. Then, after releasing the crystal water, aluminum hydroxide forms porous alumina ($Al_2O_3$) and functions as a thermal insulation material.

$$2Al(OH)_3 \rightarrow Al_2O_3 + 3H_2O$$

Note that, as will be described later, the thermal insulation sheet 10 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particles are made of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of the battery cell that has experienced thermal runaway, and can effectively prevent the temperature rise. Therefore, these are preferred inorganic hydrates.

(Average secondary particle diameter of inorganic hydrate particles: 0.01 $\mu$m or more and 200 $\mu$m or less)

In a case where the inorganic hydrate particles are used as the first inorganic particles 51, when the average particle diameter thereof is too large, it takes a certain amount of time for the first inorganic particles 51 (inorganic hydrate) near the center of the thermal insulation sheet 10 to reach the thermal decomposition temperature thereof, so that the first inorganic particles 51 near the center of the sheet may not be completely thermally decomposed. Therefore, the average secondary particle diameter of the inorganic hydrate particles is preferably 0.01 $\mu$m or more and 200 $\mu$m or less, and more preferably 0.05 $\mu$m or more and 100 $\mu$m or less.

(Particles made of thermally expandable inorganic material)

Examples of the thermally expandable inorganic material include vermiculite, bentonite, mica, and perlite.

(Particles made of hydrous porous material)

Specific examples of the hydrous porous material include zeolite, kaolinite, montmorillonite, acid clay, diatomaceous earth, wet silica, dry silica, aerogel, mica, and vermiculite.

(Inorganic balloons)

The thermal insulation material used in the present invention may contain inorganic balloons as the inorganic particles.

When inorganic balloons are contained, the convective heat transfer or the conductive heat transfer of the heat within the thermal insulation material can be prevented in a temperature range of lower than 500°C, and the thermal insulation property of the thermal insulation material can be further improved.

As the inorganic balloons, at least one kind selected from whitebait balloons, silica balloons, fly ash balloons, perlite balloons, and glass balloons can be used.

(Content of inorganic balloons: 60 mass% or less based on total mass of thermal insulation material)

The content of the inorganic balloons is preferably 60 mass% or less based on the total mass of the thermal insulation material.

(Average particle diameter of inorganic balloons: 1 $\mu$m or more and 100 $\mu$m or less)

The average particle diameter of the inorganic balloons is preferably 1 $\mu$m or more and 100 $\mu$m or less.

<1-2-2. Second Inorganic Particles>

When the thermal insulation material contain two kinds of inorganic particles, the second inorganic particles 54 are not particularly limited as long as they are different from the first inorganic particles 51 in kind, particle diameter, or the like. As the second inorganic particles 54, oxide particles, carbide particles, nitride particles, inorganic hydrate particles, silica nanoparticles, metal oxide particles, inorganic balloons such as microporous particles or hollow silica particles, particles made of a thermally expandable inorganic material, particles made of a hydrous porous material, or the like can be used. Details of these are as described above.

Note that the nanoparticles have extremely low conductive heat transfer, and can maintain an excellent thermal insulation property even when a compressive stress is applied to the thermal insulation sheet. In addition, metal oxide particles such as titania have a high effect of blocking radiant heat. Further, when large-diameter inorganic particles and small-diameter inorganic particles are used, the small-diameter inorganic particles enter gaps between the large-diameter inorganic particles, resulting in a more dense structure, and the effect of preventing heat transfer can be improved. Therefore, when the nanoparticles are used as the first inorganic particles 51, it is preferable that the thermal insulation material further contains particles made of a metal oxide having a diameter larger than that of the first inorganic particles 51 as the second inorganic particles 54.

Examples of the metal oxide include silicon oxide, titanium oxide, aluminum oxide, barium titanate, zinc oxide, zircon, and zirconium oxide. Particularly, titania is a component having a high refractive index compared to other metal oxides, and has a high effect of diffusely reflecting light and blocking radiant heat in a high temperature range of 500°C or higher. Therefore, titania is most preferably used.

(Average primary particle diameter of second inorganic particles)

In a case where the second inorganic particles 54 made of a metal oxide are contained in the thermal insulation material, when the average primary particle diameter of the second inorganic particles 54 is 1 $\mu$m or more and 50 $\mu$m or less, radiant heat transfer can be efficiently prevented in a high temperature range of 500°C or higher. The average primary particle diameter of the second inorganic particles 54 is more preferably 5 $\mu$m or more and 30 $\mu$m or less, and most preferably 10 $\mu$m or less.

(Contents of first inorganic particles and second inorganic particles)

In a case where the first inorganic particles 51 are silica nanoparticles and the second inorganic particles 54 are metal oxides, when the content of the first inorganic particles 51 is 60 mass% or more and 95 mass% or less with respect to the total mass of the first inorganic particles 51 and the second inorganic particles 54, the amount of the metal oxide particles needed to prevent the radiant heat transfer and the amount of the silica nanoparticles needed to prevent the conductive/convective heat transfer and provide the cushioning property can be optimized.

As a result, it is thought that a well-balanced and a high thermal insulation property can be obtained over a wide temperature range from the temperature at which the battery is normally used to a high temperature of 500°C or higher, even when a compressive force is applied from the outside.

<1-2-3. First Inorganic Fibers and Second Inorganic Fibers>

It is also preferable that the thermal insulation material contains first inorganic fibers 52 and second inorganic fibers 53 different from each other in at least one property selected from an average fiber diameter, a shape, and a glass transition point. When two kinds of inorganic fibers having different properties are contained, mechanical strength of the thermal insulation sheet and a retention property for the inorganic particles can be improved.

(Two kinds of inorganic fibers having different average fiber diameters and fiber shapes)

When the thermal insulation material contains two kinds of inorganic fibers, it is preferable that the average fiber diameter of the first inorganic fibers 52 is larger than the average fiber diameter of the second inorganic fibers 53, the first inorganic fibers 52 are linear or acicular, and the second inorganic fibers 53 are dendritic or curly. The first inorganic fibers 52 having a large average fiber diameter (large diameter) have an effect of improving the mechanical strength and a shape retention property of the thermal insulation sheet. The above effect can be obtained by making one of the two kinds of inorganic fibers, for example, the first inorganic fibers 52, larger in diameter than that of the second inorganic fibers 53. Since external impacts may act on the thermal insulation sheet, the containing of the first inorganic fibers 52 in the thermal insulation material increases impact resistance. External impacts include, for example, a pressing force due to expansion of battery cells, or a wind pressure due to ignition of battery cells.

In addition, in order to improve the mechanical strength and the shape retention property of the thermal insulation sheet, it is particularly preferred that the first inorganic fibers 52 are linear or acicular. Note that linear or acicular fibers refer to fibers having a degree of crimp, which will be described later, of, for example, less than 10%, and preferably 5% or less.

More specifically, in order to improve the mechanical strength and the shape retention property of a heat transfer suppression sheet, the average fiber diameter of the first inorganic fibers 52 is preferably 1 $\mu$m or more, and more preferably 3 $\mu$m or more. When the first inorganic fibers 52 are too thick, moldability and processability into a thermal insulation material may decrease. Therefore, the average fiber diameter of the first inorganic fibers 52 is preferably 20 $\mu$m or less, and more preferably 15 $\mu$m or less.

Note that the fiber length of the first inorganic fibers 52 is preferably 100 mm or less since when the first inorganic fibers 52 are too long, the moldability and the processability may decrease. Further, when the first inorganic fibers 52 are too short, the shape retention property and the mechanical strength decrease. Therefore, the fiber length thereof is preferably 0.1 mm or more.

On the other hand, the second inorganic fibers 53 having a small average fiber diameter (small diameter) have an effect of improving the retention property for other inorganic fibers, inorganic particles, etc., and increasing the flexibility of the thermal insulation material. Therefore, it is preferable that the second inorganic fibers 53 have a smaller diameter than that of the first inorganic fibers 52.

More specifically, in order to improve the retention property for other inorganic fibers, inorganic particles, etc., it is preferable that the second inorganic fibers 53 are easily deformable and have flexibility. Therefore, the average fiber diameter of the second inorganic fibers 53 having a small diameter is preferably less than 1 $\mu$m, and more preferably 0.1 $\mu$m or less. However, when the small-diameter inorganic fibers are too thin, the small-diameter inorganic fibers are easily broken, and the ability to retain other inorganic fibers, inorganic particles, etc. decreases. In addition, a large proportion of fibers remain entangled in the thermal insulation material without retaining other inorganic fibers, inorganic particles, etc., and in addition to a decrease in ability to retain other inorganic fibers, inorganic particles, etc., the moldability and the shape retention property also become poor. Therefore, the average fiber diameter of the second inorganic fibers 53 is preferably 1 nm or more, and more preferably 10 nm or more.

Note that the fiber length of the second inorganic fibers 53 is preferably 0.1 mm or less since when the second inorganic fibers 53 are too long, the moldability and the shape retention property decrease.

In addition, the second inorganic fibers 53 are preferably dendritic or curly. Having such a shape, the second inorganic fibers 53 are entangled with other inorganic fibers, inorganic particles, etc. in the thermal insulation material. Therefore, the ability to retain other inorganic fibers, inorganic particles, etc. is improved. In addition, when the thermal insulation sheet is subjected to a pressing force or a wind pressure, the second inorganic fibers 53 are prevented from slipping and moving, thereby improving the mechanical strength, particularly against an external pressing force or impact.

Note that dendritic refers to a two-dimensionally or three-dimensionally branched structure, for example, feather-like, tetrapod-like, radial, or three-dimensional mesh-like.

When the second inorganic fibers 53 are dendritic, the average fiber diameter can be obtained by measuring the diameters of a trunk and branches at several points using SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

Degree of crimp (%) = (fiber length - distance between fiber ends)/(fiber length) $\times$ 100

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the second inorganic fibers 53 is preferably 10% or more, and more preferably 30% or more. When the degree of crimp is small, the ability to retain other inorganic fibers, inorganic particles, etc. decreases, and entanglement (network) between the second inorganic fibers 53 and between the first inorganic fibers 52 and the second inorganic fibers 53 is difficult to form.

In the above embodiment, as a method of improving the mechanical strength and the shape retention property of the heat transfer suppression sheet, and the retention property for other inorganic fibers, inorganic particles, etc., the first inorganic fibers 52 and the second inorganic fibers 53 having different average fiber diameters and fiber shapes are used. However, the mechanical strength, the shape retention property, and the particle retention property of the heat transfer suppression sheet can also be improved by using the first inorganic fibers 52 and the second inorganic fibers 53 having different glass transition points or average fiber diameters.

As described above, in the present embodiment, in order to improve the mechanical strength, the shape retention property, and the particle retention property of the heat transfer suppression sheet, it is preferable to use various combinations of inorganic fibers. Hereinafter, a combination of the first inorganic fibers and the second inorganic fibers different from the embodiment shown in Fig. 5 will be described. In the present description, for convenience, other embodiments regarding inorganic fibers will be described using Fig. 5.

(Two kinds of inorganic fibers having different glass transition points)

When the thermal insulation material contains two kinds of inorganic fibers, it is preferable that the first inorganic fibers 52 are amorphous fibers, the second inorganic fibers 53 are at least one kind of fibers selected from amorphous fibers and crystalline fibers, the amorphous fibers having a glass transition point higher than that of the first inorganic fibers 52. In addition, when the first inorganic particles 51 containing at least one kind selected from nanoparticles, hollow particles, and porous particles are used together with the above two kinds of inorganic fibers, the thermal insulation performance can be further improved.

The melting point of the crystalline inorganic fibers is usually higher than the glass transition point of the amorphous inorganic fibers. Therefore, when the first inorganic fibers 52 are exposed to a high temperature, the surface thereof softens before the second inorganic fibers 53 and binds other inorganic fibers, inorganic particles, etc. Therefore, by containing the first inorganic fibers 52 as described above in the thermal insulation material, the mechanical strength of a thermal insulation layer can be improved.

Specifically, as the first inorganic fibers 52, inorganic fibers having a melting point of lower than 700°C are preferred, and many amorphous inorganic fibers can be used. Among them, fibers containing $SiO_2$ are preferred, and glass fibers are more preferred because of being inexpensive, easily available, and having excellent handling properties.

As described above, the second inorganic fibers 53 are at least one kind of fibers selected from amorphous fibers and crystalline fibers, the amorphous fibers having a glass transition point higher than that of the first inorganic fibers 52. As the second inorganic fibers 53, many crystalline inorganic fibers can be used.

When the second inorganic fibers 53 are made of crystalline fibers or have a glass transition point higher than that of the first inorganic fibers 52, even when the first inorganic fibers 52 soften when exposed to a high temperature, the second inorganic fibers 53 do not melt or soften. Therefore, even during thermal runaway of battery cells, it can maintain the shape and continue to be present between the battery cells.

In addition, when the second inorganic fibers 53 do not melt or soften, minute spaces are maintained between particles, between particles and fibers, and between fibers contained in the thermal insulation material. Therefore, the thermal insulation effect due to air can be exhibited and excellent heat transfer suppression performance can be maintained.

When the second inorganic fibers 53 are crystalline, as the second inorganic fibers 53, ceramic fibers such as alumina fibers, alumina silicate fibers, and zirconia fibers, silica fibers, glass fibers, glass wool, rock wool, carbon fibers, basalt fibers, soluble fibers, refractory ceramic fibers, aerogel composites, magnesium silicate fibers, alkaline earth silicate fibers, zirconia fibers, potassium titanate fibers, and mineral fibers such as wollastonite can be used.

When the second inorganic fibers 53 are those having a melting point of higher than 1000°C among the fibers listed, even when the battery cells experiences thermal runaway, the second inorganic fibers 53 do not melt or soften and can maintain the shape, and can thus be suitably used.

Note that among the fibers listed as the above second inorganic fibers 53, for example, it is more preferable to use silica fibers, ceramic fibers such as alumina fibers and alumina silicate fibers, and mineral fibers. Among them, it is still more preferable to use those having a melting point of higher than 1000°C.

In addition, even when the second inorganic fibers 53 are amorphous, any fibers having a glass transition point higher than that of the first inorganic fibers 52 can be used. For example, glass fibers having a glass transition point higher than that of the first inorganic fibers 52 may be used as the second inorganic fibers 53.

Note that as the second inorganic fibers 53, the various illustrated inorganic fibers may be used alone, or two or more kinds thereof may be used in combination.

Note that, as described above, the first inorganic fibers 52 have a glass transition point lower than that of the second inorganic fibers 53, and when exposed to a high temperature, the first inorganic fibers 52 soften first. Therefore, the first inorganic fibers 52 can bind other inorganic fibers, inorganic particles, etc. However, for example, in a case where the second inorganic fibers 53 are amorphous and have a fiber diameter smaller than a fiber diameter of the first inorganic fibers 52, when the glass transition points of the first inorganic fibers 52 and the second inorganic fibers 53 are close to each other, the second inorganic fibers 53 may soften first.

Therefore, when the second inorganic fibers 53 are amorphous fibers, the glass transition point of the second inorganic fibers 53 is preferably 100°C or more, and more preferably 300°C or more, higher than the glass transition point of the first inorganic fibers 52.

Note that the fiber length of the first inorganic fibers 52 is preferably 100 mm or less, and preferably 0.1 mm or more. The fiber length of the second inorganic fibers 53 is preferably 0.1 mm or less. The reasons are as described above.

(Two kinds of inorganic fibers having different glass transition points and average fiber diameters)

When the thermal insulation material contains two kinds of inorganic fibers, it is preferable that the first inorganic fibers 52 are amorphous fibers, the second inorganic fibers 53 are at least one kind of fibers selected from amorphous fibers and crystalline fibers, the amorphous fibers having a glass transition point higher than that of the first inorganic fibers 52, and the average fiber diameter of the first inorganic fibers 52 is larger than the average fiber diameter of the second inorganic fibers 53.

As described above, when the thermal insulation material according to the present embodiment contains two kinds of inorganic fibers, it is preferable that the average fiber diameter of the first inorganic fibers 52 is larger than that of the second inorganic fibers 53. In addition, it is preferable that the large-diameter first inorganic fibers 52 are amorphous fibers, the small-diameter second inorganic fibers 53 are at least one kind of fibers selected from amorphous fibers and crystalline fibers, the amorphous fibers having a glass transition point higher than that of the first inorganic fibers 52. Accordingly, the first inorganic fibers 52 have a low glass transition point and softens early, and thus becomes film-like and hardens as the temperature rises. On the other hand, when the small-diameter second inorganic fibers 53 are at least one kind of fibers selected from amorphous fibers and crystalline fibers, the amorphous fibers having a glass transition point higher than that of the first inorganic fibers 52, even when the temperature rises, the small-diameter second inorganic fibers 53 remain in the form of fibers. Therefore, the structure of the thermal insulation sheet can be maintained and powder falling can be prevented.

Note that even in this case, the fiber length of the first inorganic fibers 52 is preferably 100 mm or less, and preferably 0.1 mm or more. The fiber length of the second inorganic fibers 53 is preferably 0.1 mm or less. The reasons are as described above.

In addition, the thermal insulation material may contain different inorganic fibers in addition to the first inorganic fibers 52 and the second inorganic fibers 53.

(Contents of first inorganic fibers and second inorganic fibers)

When the thermal insulation material contains two kinds of inorganic fibers, the content of the first inorganic fibers 52 is preferably 3 mass% or more and 30 mass% or less based on the total mass of the thermal insulation material, and the content of the second inorganic fibers 53 is preferably 3 mass% or more and 30 mass% or less based on the total mass of the thermal insulation material.

In addition, the content of the first inorganic fibers 52 is more preferably 5 mass% or more and 15 mass% or less based on the total mass of the thermal insulation material, and the content of the second inorganic fibers 53 is more preferably 5 mass% or more and 15 mass% or less based on the total mass of the thermal insulation material. With such contents, the shape retention property, pressing force resistance, and wind pressure resistance of the first inorganic fibers 52 and the ability to retain the inorganic particles of the second inorganic fibers 53 are exhibited in a well-balanced manner.

<1-2-4. Other Materials>

In addition to the first inorganic particles 51, the second inorganic particles 54, the first inorganic fibers 52, and the second inorganic fibers 53, the thermal insulation material used in the present invention may contain components necessary for molding into a thermal insulation material, such as organic fibers, a binding material, a colorant, that have the effect of improving the strength of the thermal insulation material. Hereinafter, other components will also be described in detail.

(Binding material)

The thermal insulation material according to the present invention can be formed by sintering and the like even when a binding material is not contained. However, particularly when the thermal insulation material contains silica nanoparticles, it is preferable to add a binding material in an appropriate content in order to maintain the shape of the thermal insulation material. In the present invention, the binding material may be any binding material that binds the inorganic particles in order to retain the same, and the form thereof does not matter, such as a binder with adhesion, fibers that physically entangle particles, or a heat-resistant resin that adheres with an adhesive force. The above first inorganic fibers 52 and second inorganic fibers 53 also function as a binder

Note that as the binder, an organic binder, an inorganic binder or the like can be used. In the present invention, the kinds are particularly limited. As the organic binder, a polymer agglomerate, an acrylic emulsion, or the like can be used, and as the inorganic binder, silica sol, alumina sol, aluminum sulfate, or the like can be used. These function as adhesives once the solvent such as water is to be removed.

The organic fibers are not particularly limited, and synthetic fibers, natural fibers, pulp, or the like can be used. Specific examples thereof include polyvinyl alcohol (PVA) fibers, polyethylene fibers, nylon fibers, polyurethane fibers, ethylene-vinyl alcohol copolymer fibers, polyethylene terephthalate fibers, polybutylene terephthalate fibers, polytrimethylene terephthalate fibers, polyacetal fibers, polytetrafluoroethylene fibers, polyetheretherketone fibers, polyphenylene sulfide fibers, polyamide fibers, and polyparaphenylphthalamide fibers.

In the thermal insulation material used in the present invention, the content of the binding material is preferably 60 mass% or less, and more preferably 50 mass% or less, based on the total mass of the thermal insulation material. In the thermal insulation material used in the present invention, the content of the binding material is preferably 10 mass% or more, and more preferably 20 mass% or more, based on the total mass of the thermal insulation material.

The thickness of the thermal insulation material used in the present invention is not particularly limited, and is preferably in the range of 0.1 mm or more and 30 mm or less. When the thickness of the thermal insulation material is within the above range, sufficient mechanical strength can be obtained and molding is easy.

[2. Method for Producing Thermal Insulation Sheet]

Next, a method for producing a thermal insulation sheet according to the present invention will be described.

The method for producing a thermal insulation sheet according to the present embodiment is not particularly limited, and the thermal insulation sheet can be obtained, for example, by coating, with a resin film forming composition, a thermal insulation material obtained by molding a material for a thermal insulation material containing inorganic particles into a sheet shape, and by performing drying. However, since it is preferable that the thickness of the resin film of the thermal insulation sheet according to the present embodiment is less than 100 $\mu$m, it is preferable to appropriately select a method for forming a resin film.

[2-1. Molding of Thermal Insulation Material]

The thermal insulation material may be produced by molding the material for a thermal insulation material containing inorganic particles using a wet paper forming method, a dry molding method, or a wet molding method, or may be produced by an extrusion molding method. Hereinafter, a production method for obtaining the thermal insulation material by each molding method will be described.

<2-1-1. Method for Producing Thermal Insulation Material by Using Wet Paper Forming Method>

In the wet paper forming method, first, inorganic particles and, if necessary, inorganic fibers, organic fibers, or organic binders, which are binding materials, are mixed in water and stirred with a stirrer to prepare a mixed solution. Thereafter, the obtained mixed solution is dehydrated through a filtration mesh to prepare a wet sheet. Thereafter, the obtained wet sheet is heated and pressurized, whereby a thermal insulation material can be obtained. Note that before the heating and pressurizing step, a ventilation drying treatment may be performed in which hot air is passed through the wet sheet to dry the sheet, or the wet sheet may be heated and pressurized in a wet state without being subjected to the ventilation drying treatment.

<2-1-2. Method for Producing Thermal Insulation Sheet by Using Dry Molding Method>

In the dry molding method, first, inorganic particles and, if necessary, inorganic fibers, organic fibers, or organic binders, which are binding materials, are charged into a mixer such as a V-type mixer at a predetermined ratio. Then, the materials charged into the mixer are sufficiently mixed, and then the mixture is charged into a predetermined mold and pressed to obtain a thermal insulation material. During the pressing, heating may be performed if necessary.

The press pressure is preferably in the range of 0.98 MPa to 9.80 MPa. When the press pressure is less than 0.98 MPa, the obtained thermal insulation material may not be able to maintain the strength and may collapse. On the other hand, when the press pressure is more than 9.80 MPa, the processability may decrease due to excessive compression, or due to an increase in bulk density, solid heat transfer may increase and the thermal insulation property may decrease.

<2-1-3. Method for Producing Thermal Insulation Sheet by Using Extrusion Molding Method>

In the extrusion molding method, first, water is added to inorganic particles and, if necessary, inorganic fibers, organic fibers, or organic binders, which are binding materials, and the mixture is kneaded with a kneader to prepare a paste. Then, the obtained paste is extruded from a slit-shaped nozzle using an extrusion molding machine and further dried to obtain a thermal insulation material. It is preferable to use methylcellulose, water-soluble cellulose ether, or the like as the organic binder, and any organic binder that is generally used in the case of using the extrusion molding method can be used without particular limitation.

[2-2. Formation of Resin Film]

The method for forming a resin film is not particularly limited, and, for example, it can be formed by coating the thermal insulation material with a resin film forming composition and performing drying.

A raw material resin contained in the resin film forming composition is not limited as long as the effects of the present invention can be obtained. A flame-retardant resin is preferred, and examples thereof include an epoxy resin, a melamine resin, a silicone resin, a urethane resin, a polyvinyl alcohol (PVA), an acrylic resin, and a polyester resin. A resin having natural fire extinguishing properties or a resin having a high oxygen index is more preferred.

The resin film forming composition may contain components other than the resin, for example, organic fibers, inorganic fibers, organic fillers, inorganic fillers, organic pigments, and inorganic pigments.

A solvent used in the resin film forming composition is not particularly limited, and examples thereof include water and an organic solvent. From the viewpoint of versatility, it is preferable to use water.

The resin concentration in the resin film forming composition (content of resin based on the total mass of resin film forming composition) is preferably 25 mass% to 100 mass%. Within the above range, it is easier to form a resin film having a desired thickness and shape.

Examples of a coating method with the composition include coating by printing such as an inkjet printing method, a screen printing method, an offset printing method, a flexographic printing method, and a gravure printing method, in addition to a dip coating method, a die coating method, a barcode method, a spin coating method, an offset method, and a spray coating method.

A coating method with the resin film forming composition is not particularly limited, and it is preferable to use a screen printing method or a spray coat printing method, and it is more preferable to use a screen printing method, since it is easy to form a resin film having a desired thickness and shape.

[3. Applications of Thermal Insulation Sheet]

The thermal insulation sheet according to the embodiment of the present invention is used in a battery pack in which battery cells are connected in series or in parallel. For example, it is suitably used for a battery pack interposed between the battery cells.

When the thermal insulation sheet according to the embodiment of the present invention is used in a battery pack, it is preferable that a resin film is formed on any surface of the thermal insulation sheet in contact with the battery cells.

[4. Battery Pack]

A battery pack according to the embodiment of the present invention includes battery cells and the thermal insulation sheet according to the present embodiment, and the battery cells are connected in series or in parallel.

Fig. 6 is a cross-sectional view schematically showing an example of a battery pack to which the thermal insulation sheet according to the embodiment of the present invention is applied. For example, as shown in Fig. 6, a battery pack 100 according to the embodiment of the present invention includes battery cells 20a, 20b, and 20c arranged in parallel, connected in series or in parallel, and stored in a battery case 30, and the thermal insulation sheet 10 is interposed between the battery cells 20a, 20b, and 20c.

In the battery pack 100 configured in this manner, since the thermal insulation sheet 10 includes a resin film that covers at least a part of the surface of the thermal insulation material, it is possible to prevent peeling off of the resin film from the surface of the thermal insulation material, and also to prevent an increase in thermal conductivity and a decrease in flame retardancy.

In addition, when the thermal insulation sheet 10 is interposed between the battery cells 20a, 20b, and 20c, the propagation of heat between the battery cells 20a, 20b, and 20c can be prevented during normal use.

Further, even when one battery cell of the battery cells 20a, 20b, and 20c experiences thermal runaway and reaches a high temperature, expands, or ignites, due to the presence of the thermal insulation sheet 10 according to the present embodiment, the propagation of the heat between the battery cells 20a, 20b, and 20c can be prevented. Therefore, the chain of the thermal runaway can be inhibited, and an adverse influence on other battery cells can be minimized.

Note that the battery pack 100 according to the present embodiment is not limited to the battery pack shown in Fig. 6, and the thermal insulation sheet 10 can be disposed not only between the battery cell 20a and the battery cell 20b or between the battery cell 20b and the battery cell 20c, but also between the battery cells 20a, 20b, and 20c and the battery case 30.

In the battery pack configured in this manner, when a certain battery cell ignites, it is possible to prevent the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the thermal insulation sheet 10 can be disposed not only between the battery cells but also between the battery cells 20a, 20b, and 20c and the battery case 30, it is no necessary to newly prepare a flame retardant material, or the like, and a safe battery pack 100 can be easily formed at a low cost.

In the battery pack according to the present embodiment, the thermal insulation sheet 10 disposed between the battery cells 20a, 20b, and 20c and the battery case 30 and the battery cells 20a, 20b, and 20c may be in contact with each other or may have a gap therebetween. However, in a case where there is a gap between the thermal insulation sheet 10 and the battery cells 20a, 20b, and 20c, even when the temperature of any one battery cell of the battery cells rises and the volume expands, the deformation of the battery cell is allowable.

Note that the thermal insulation sheet according to the present embodiment can be easily bent depending on the kinds and the thicknesses of the resin film and the thermal insulation material. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Examples

Hereinafter, Examples of the thermal insulation sheet according to the present embodiment will be described, but the present invention is not limited to these Examples.

<Comparative Example 1>

The following inorganic particles and binding materials were prepared, and these materials were sufficiently stirred and mixed to prepare a slurry. The obtained slurry was used to form a thermal insulation material by using a paper forming method.

A slurry was prepared by adding 56 mass% of silica nanoparticles (average particle diameter: 5 nm), 24 mass% of titania (average particle diameter: 8 $\mu$m) (silica nanoparticles: titania particles = 70 mass%: 30 mass%), and 11 mass% of glass fibers (average fiber diameter: 10 $\mu$m, average fiber length: 5 mm) and 8 mass% of pulp fibers as binding materials, and thoroughly stirring and mixing the mixture. The above slurry was made into paper to obtain a thermal insulation material, and the thermal insulation material without a resin layer on the surface was taken as a thermal insulation sheet in Comparative Example 1.

Note that drying was performed at 110°C, and the obtained thermal insulation material had a width of 80 mm, a length of 80 mm, and a thickness of 1 mm as sizes.

<Comparative Examples 2 and 3>

An aqueous acrylic resin solution having a resin concentration of 50 mass% was used as a resin layer forming composition, and resin layers each having a film thickness of 60 $\mu$m and 300 $\mu$m were separately formed on the above thermal insulation material by a coating method using a bar coater and dried by heating at 140°C, to obtain thermal insulation sheets in Comparative Example 2 and Comparative Example 3.

As a result of visual observation of the surface of the thermal insulation sheets in Comparative Examples 2 and 3 on which the resin layer was provided, cracks were observed in the resin layer in both the thermal insulation sheets.

<Example 1>

A aqueous polyvinyl alcohol (PVA) resin solution having a resin concentration of 10 mass% was used as a resin film forming composition, and the above thermal insulation material was coated with the resin film forming composition using a screen printing machine and dried by heating at 130°C to form a resin film, so as to obtain a thermal insulation sheet in Example 1.

As a result of visual observation of the surface of the thermal insulation sheet in Example 1 on which the resin film was provided, it was confirmed that the resin film in Example 1 had no cracks in the film and had pores distributed in a dispersed manner over the entire surface of the resin film.

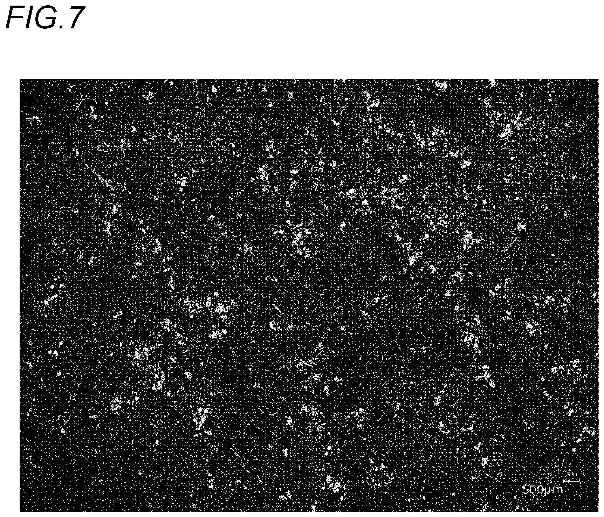

Fig. 7 is a photograph substituted for a drawing of the surface of the thermal insulation sheet in Example 1, which is taken using a digital microscope. In Fig. 7, white parts represent the pores, and black parts represent the resin film.

As shown in Fig. 7, it was confirmed in the image taken with the digital microscope that pores were dispersed in a dispersed manner throughout the field of view. Further, the ratio (A/B) of the total area A of the resin film portion to the total area B of the pore portion, calculated by observing the digital microscope image, was 17.5.

In addition, by observing, for example, the SEM image of the cross section of the thermal insulation sheet shown in Fig. 3, it was confirmed that the resin film 1 of the thermal insulation sheet 10 was irregularly curved along the surface shape of the thermal insulation material 2 and had a width in thickness.

When the thickness of the resin film was measured at 45 points from the SEM image of the cross section of the thermal insulation sheet under the conditions described below, the thickness was in the range of more than 0 μm and 40.3 μm, and the average thickness was 13.8 μm. Note that the thickness of the pores was not measured.

[Measurement and Evaluation]

The following measurement and evaluation were performed on the thermal insulation sheets in Example 1 and Comparative Example 1.

(Ratio (A/B) of total area A of resin film portion to total area B of pore portion)

The ratio (A/B) of the total area A of the resin film portion to the total area B of the pore portion was calculated by observing the digital microscope image of the surface on the resin film side.

The A/B was calculated by using a digital microscope (KEYENCE VHX-5000) to observe the surface of the thermal insulation sheet provided with the resin film at a magnification of 20 and calculating a range of brightness settings 96 to 255 as the total area B of the pore portion and a range of brightness settings of 0 to 96 as the total area A of the resin film portion.

(Thickness of resin film)

The thickness of the resin film is, for example, an average value obtained by measuring the thickness of the resin film at 45 points at 9 positions at an interval of 35.8 μm in the SEM image of the cross section of 5 points on the thermal insulation sheet, as shown in Fig. 3.

(Powder falling)

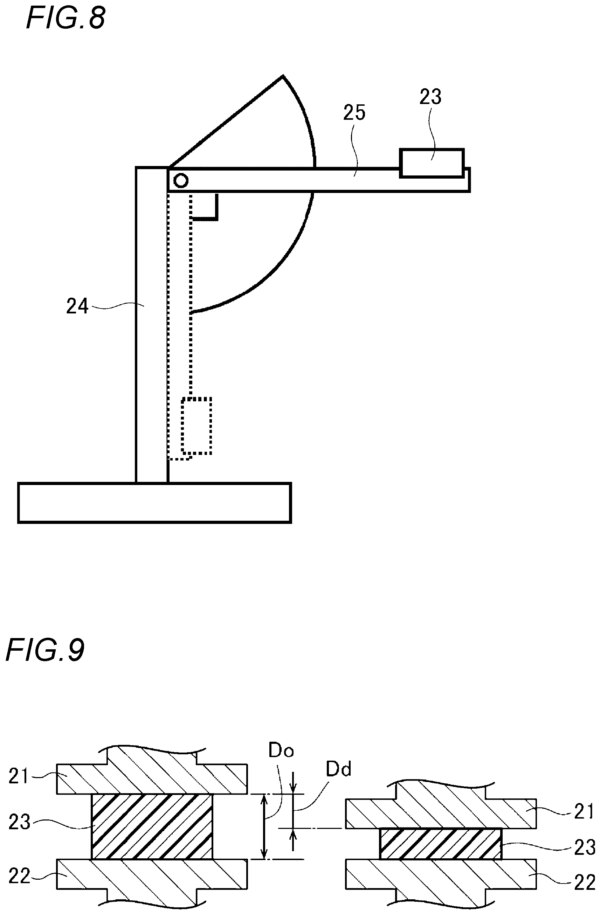

As shown in Fig. 8, in a device in which an arm 25 was attached so as to operate at an apex of a support pillar 24 and a test material 23 was attached to the tip of the arm 25, the arm 25 was pulled up and fixed to any angle, and then released from the fixation and allowed to fall, thereby causing the support pillar 24 and the arm 25 to collide to apply an impact. Note that the size of the test material 23 was 100 mm × 100 mm, the arm length was 915 mm, the impact was applied three times, and the angle between the support pillar and the arm was 90°. Then, powder falling E (falling amount of inorganic particles) (g/m$^2$) was evaluated using the following equation, where the weight before the impact was F0 (g) and the weight after the impact was Fw (g).

$$E = (F0-Fw)/\text{test material area}$$

In the above evaluation method, when the powder falling is less than 0.5 g/m$^2$, it can be said that the powder falling prevention performance is good.

(Flame retardancy)

A flame retardancy test was performed in accordance with UL94 (flame retardancy test for polymer materials) in the UL test standard.

A material that passes the 94V-0 criterion in the UL94 test standard can be said to have good flame retardancy.

(Thermal conductivity)

The thermal conductivity (W/m·K) was measured at room temperature (25°C). Note that the thermal conductivity was measured in accordance with "Measurement method of thermal resistance and thermal conductivity of thermal insulation material in Part 2 heat flow meter method (HFM method)" described in JIS A 1412-2.

(Compression rate)

As shown in Fig. 9, a universal testing machine was used, the test material 23 was disposed between an upper plate 21 and a lower plate 22, and the test material 23 was pressed by moving the upper plate 21 downward. Note that the size of the test material 23 was 25 mm × 25 mm, the compression speed was 0.5 (mm/min), and the compressive stress was 0.5 MPa and 3.5 MPa.

Then, a compression rate C (%) was calculated using the following equation, where the initial thickness of the test material 23 was Do (mm) and the amount of compression (reduced thickness) was $D_d$ (mm).

$$C = (D_d/D_0) \times 100$$

Note that the compression rate measurements were performed on the thermal insulation sheets (test material 23) in Example 1 and Comparative Example 1.

The evaluation results are shown in Table 1.

[Table 1]

Table 1

| | | Example 1 | Comparative Example 1 |
|---|---|---|---|
| Powder falling [g/m²] | | 0.11 | 1.15 |
| Flame retardancy | | V0 | V0 |
| Thermal conductivity [W/m·K] | | 0.037 | 0.036 |
| Compression rate | [%/0.5 MPa] | 8.8 | 11.3 |
| | [%/3.5 MPa] | 29.4 | 34.1 |

The thermal insulation sheet in Example 1 including a resin film prevents the powder falling by about 90% compared to the thermal insulation sheet in Comparative Example 1 without a resin film. In addition, it is found that since the resin layer is film-like and thin, the decrease in flame retardancy and the increase in thermal conductivity due to resin layer formation are prevented, and good flame retardancy and thermal conductivity equivalent to those without a resin film can be maintained.

Further, it is confirmed that it has a compression rate lower than that of the thermal insulation sheet in Comparative Example 1 without a resin film, and can be suitably used, for example, by being interposed between battery cells of a battery pack.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No.

2021-126038) filed on July 30, 2021 and a Japanese patent application (Japanese Patent Application No. 2021-209895) filed on December 23, 2021, and the contents thereof are incorporated herein by reference.

REFERENCE SIGNS LIST

1 resin film
2 thermal insulation material
10 thermal insulation sheet
20a, 20b, 20c battery cell
21 upper plate
22 lower plate
23 test material
24 support pillar
25 arm
30 battery case
31 pore
41 inorganic particles
42 inorganic fibers
100 battery pack

**Claims**

1. A thermal insulation sheet comprising:

    a thermal insulation material containing inorganic particles; and
    a resin film covering at least a part of a surface of the thermal insulation material.

2. The thermal insulation sheet according to claim 1, wherein the resin film has an average thickness of 1 $\mu$m to 95 $\mu$m.

3. The thermal insulation sheet according to claim 1 or 2, wherein the resin film has a thickness of more than 0 $\mu$m and less than 100 $\mu$m.

4. The thermal insulation sheet according to any one of claims 1 to 3, wherein the resin film is irregularly curved along a surface shape of the thermal insulation material.

5. The thermal insulation sheet according to any one of claims 1 to 4, wherein the resin film has pores.

6. The thermal insulation sheet according to claim 5, wherein the pores are distributed in a dispersed manner over an entire surface of the resin film.

7. The thermal insulation sheet according to claim 5 or 6, wherein a ratio (A/B) of a total area A of a resin film portion to a total area B of a pore portion, calculated by observing a digital microscope image of a surface on a resin film side, is 7/3 to 99/1.

8. The thermal insulation sheet according to any one of claims 1 to 7, wherein the inorganic particles are particles made of at least one kind of inorganic material selected from oxide particles, carbide particles, nitride particles, and inorganic hydrate particles.

9. The thermal insulation sheet according to any one of claims 1 to 8, wherein the thermal insulation material further contains first inorganic fibers and second inorganic fibers, the first inorganic fibers being different from the second inorganic fibers in at least one property selected from an average fiber diameter, a shape, and a glass transition point.

10. The thermal insulation sheet according to claim 9, wherein

    the average fiber diameter of the first inorganic fibers is larger than the average fiber diameter of the second inorganic fibers, and
the first inorganic fibers are linear or acicular, and the second inorganic fibers are dendritic or curly.

11. The thermal insulation sheet according to claim 9, wherein

the first inorganic fibers are amorphous fibers,
the second inorganic fibers are at least one kind of fibers selected from amorphous fibers and crystalline fibers, the amorphous fibers having a glass transition point higher than the glass transition point of the first inorganic fibers, and
the average fiber diameter of the first inorganic fibers is larger than the average fiber diameter of the second inorganic fibers.

12. The thermal insulation sheet according to claim 9, wherein

the inorganic particles include at least one kind selected from nanoparticles, hollow particles, and porous particles,
the first inorganic fibers are amorphous fibers, and
the second inorganic fibers are at least one kind of inorganic fibers selected from amorphous fibers and crystalline fibers, the amorphous fibers having a glass transition point higher than the glass transition point of the first inorganic fibers.

13. The thermal insulation sheet according to any one of claims 1 to 12, which is used in a battery pack in which battery cells are connected in series or in parallel.

14. A method for producing a thermal insulation sheet which is a method for producing the thermal insulation sheet according to any one of claims 1 to 13, comprising:

a step of molding a material for a thermal insulation material containing the inorganic particles into a sheet shape; and
a step of coating the surface of the thermal insulation material molded into the sheep shape with the resin film forming composition by a screen printing method or a spray coat printing method to form the resin film.

15. A battery pack comprising:

battery cells; and
the thermal insulation sheet according to claim 13, wherein
the battery cells are connected in series or in parallel.

*FIG.1*

*FIG.2*

*FIG.3*

## FIG.4

*FIG.5*

*FIG.6*

*FIG.7*

*FIG.8*

*FIG.9*

## INTERNATIONAL SEARCH REPORT

| International application No. |
|---|
| **PCT/JP2022/007902** |

### A. CLASSIFICATION OF SUBJECT MATTER

*B32B 7/027*(2019.01)i; *F16L 59/02*(2006.01)i; *H01M 10/625*(2014.01)i; *H01M 10/658*(2014.01)i; *H01M 50/204*(2021.01)i
FI:  F16L59/02; H01M10/658; H01M10/625; H01M50/204 401H; B32B7/027

According to International Patent Classification (IPC) or to both national classification and IPC

### B. FIELDS SEARCHED

Minimum documentation searched (classification system followed by classification symbols)

H01M10/625; H01M10/658; B32B7/027; F16L59/02; H01M50/204

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-215014 A (PANASONIC IP MAN CORP) 07 December 2017 (2017-12-07) paragraphs [0012]-[0051], fig. 1-11 | 1-3, 8, 13, 15 |
| Y | | 4-7, 9-12, 14 |
| Y | WO 2016/140346 A1 (NEC CORP) 09 September 2016 (2016-09-09) paragraphs [0018]-[0043], fig. 4A-5 | 4-7, 9-12, 14 |
| Y | WO 2018/211906 A1 (PANASONIC IP MAN CORP) 22 November 2018 (2018-11-22) paragraphs [0016]-[0146], fig. 1-6 | 9-12, 14 |
| Y | JP 2019-508632 A (APPLE INC.) 28 March 2019 (2019-03-28) paragraphs [0082]-[0083] | 14 |
| A | JP 3-247577 A (MATSUSHITA ELECTRIC WORKS LTD) 05 November 1991 (1991-11-05) | 1-15 |
| A | JP 2017-204368 A (HITACHI MAXELL) 16 November 2017 (2017-11-16) | 1-15 |
| A | JP 2021-34278 A (IBIDEN CO LTD) 01 March 2021 (2021-03-01) | 1-15 |
| A | JP 2021-64510 A (IBIDEN CO LTD) 22 April 2021 (2021-04-22) | 1-15 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/007902**

| C. | DOCUMENTS CONSIDERED TO BE RELEVANT | |
|---|---|---|
| Category* | Citation of document, with indication, where appropriate, of the relevant passages | Relevant to claim No. |
| A | JP 2019-204637 A (IBIDEN CO LTD) 28 November 2019 (2019-11-28) | 1-15 |

Form PCT/ISA/210 (second sheet) (January 2015)

<div align="center">

**INTERNATIONAL SEARCH REPORT**
**Information on patent family members**

</div>

International application No.

**PCT/JP2022/007902**

| Patent document cited in search report | | | Publication date (day/month/year) | Patent family member(s) | | | Publication date (day/month/year) |
|---|---|---|---|---|---|---|---|
| JP | 2017-215014 | A | 07 December 2017 | (Family: none) | | | |
| WO | 2016/140346 | A1 | 09 September 2016 | US<br>paragraphs [0026]-[0051], fig. 4A-5 | 2018/0040867 | A1 | |
| WO | 2018/211906 | A1 | 22 November 2018 | US<br>paragraphs [0030]-[0163], fig. 1-6 | 2019/0178434 | A1 | |
| | | | | EP | 3627030 | A1 | |
| | | | | CN | 109642697 | A | |
| JP | 2019-508632 | A | 28 March 2019 | US<br>paragraphs [0096]-[0097] | 2019/0140237 | A1 | |
| | | | | WO | 2017/106524 | A1 | |
| | | | | KR | 10-2018-0081802 | A | |
| | | | | CN | 108475748 | A | |
| JP | 3-247577 | A | 05 November 1991 | (Family: none) | | | |
| JP | 2017-204368 | A | 16 November 2017 | (Family: none) | | | |
| JP | 2021-34278 | A | 01 March 2021 | WO | 2021/039844 | A1 | |
| | | | | EP | 3835262 | A1 | |
| | | | | KR | 10-2021-0034671 | A | |
| | | | | CN | 112714978 | A | |
| JP | 2021-64510 | A | 22 April 2021 | WO | 2021/070933 | A1 | |
| JP | 2019-204637 | A | 28 November 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019508632 A
- JP 2020002979 A
- JP 2021126038 A
- JP 2021209895 A